# EUROPÄISCHE PATENTSCHRIFT

(11) **EP 3 194 114 B1**
(45) Veröffentlichungstag und Bekanntmachung des Hinweises auf die Patenterteilung: **16.02.2022**
(21) Anmeldenummer: 15771039.3
(22) Anmeldetag: 03.09.2015
(51) Int. Cl.: B23Q 3/155

(54) **GREIFEINRICHTUNG FÜR EIN BEARBEITUNGSWERKZEUG, SPEICHERSYSTEM SOWIE VERFAHREN**
SYSTEM FOR GRIPPING A PROCESSING TOOL, STORAGE SYSTEM AND METHOD
DISPOSITIF DE PRÉHENSION POUR UN OUTIL D'USINAGE, SYSTÈME DE STOCKAGE ET PROCÉDÉ

(30) Priorität: 19.09.2014 DE 102014218899
(43) Veröffentlichungstag der Anmeldung: 26.07.2017
(73) Patentinhaber: HOMAG GmbH, 72296 Schopfloch (DE)
(72) Erfinder: SCHMIEDER, Volker, 72116 Mössingen (DE); MATT, Marco, 72250 Wittlensweiler (DE)
(74) Vertreter: Hoffmann Eitle
(86) Internationale Anmeldenummer: PCT/EP2015/070127
(87) Internationale Veröffentlichungsnummer: WO 2016/041780

(56) Entgegenhaltungen:
- EP-A1- 0 481 275
- EP-A2- 1 016 497
- WO-A1-00/16213
- WO-A1-00/16213
- WO-A1-00/76746
- WO-A1-00/76746
- WO-A1-02/14004
- WO-A1-02/14004
- DE-A1- 2 455 547
- DE-A1- 2 455 547
- DE-A1- 19 537 070
- DE-A1- 19 537 070
- DE-A1-102005 006 722
- GB-A- 2 140 334
- GB-A- 2 140 334
- US-A- 5 908 374
- US-A- 5 908 374
- None

## Beschreibung

### Technisches Gebiet

Die vorliegende Erfindung betrifft eine Greifeinrichtung zur Aufnahme eines Bearbeitungswerkzeugs sowie ein Verfahren. Derartige Bearbeitungswerkzeuge werden beispielsweise in Bearbeitungsmaschinen bzw. Bearbeitungszentren der holzverarbeitenden Industrie eingesetzt.

### Stand der Technik

Bei der Herstellung von Holzfensterkanteln werden üblicherweise verschiedenste Bearbeitungswerkzeuge eingesetzt, da an diesen Werkstücken unterschiedliche Profile auszubilden sind. Dies wiederum führt dazu, dass relativ viele Bearbeitungswerkzeuge bzw. Bearbeitungsaggregate (nachfolgend auch als "Werkzeuge" bezeichnet) vorgehalten werden müssen, die je nach Bedarf in eine Bearbeitungsmaschine einzuwechseln sind.

Im Stand der Technik sind verschiedene Maßnahmen zur Speicherung von Werkzeugen bekannt, und es besteht die Anforderung, die Werkzeugwechselzeiten zu optimieren und damit die Vorbereitungszeit zur Bereitstellung eines Werkzeugs parallel zur Bearbeitung eines Werkstücks durchzuführen. Aus diesem Grund werden in der Regel mehrere Umsetzer zwischen dem Werkzeugmagazin und Werkzeugwechselspindel eingesetzt.

Als Werkzeugmagazine sind Tellerwechsler sowie Kettenwechsler bekannt. Während Tellerwechsler aufgrund ihres Umfangs einen relativ hohen Platzbedarf haben, während dies bei Kettenwechslern nicht der Fall ist, sind allerdings die Herstellungskosten für die Ketten des Kettenwechslers vergleichsweise hoch. Je nach konkreter Anforderung einer Bearbeitungsmaschine ist deshalb zu entscheiden, ob ein Tellerwechsler oder ein Kettenwechsler eingesetzt wird. Beispielsweise ist die DE 10 2012 201 776 A1 bekannt, die einen Tellerwechsler zur Aufnahme von Bearbeitungswerkzeugen und/oder Bearbeitungsaggregaten für eine Bearbeitungsvorrichtung zeigt. Der Tellerwechsler (Magazin) umfasst eine erste Aufnahmeeinrichtung mit mehreren ersten Aufnahmen für Bearbeitungswerkzeuge und/oder Bearbeitungsaggregate, wobei diese Aufnahmen an einem ersten Umfang angeordnet sind. Ferner ist eine zweite Aufnahmeeinrichtung mit mehreren zweiten Aufnahmen vorgesehen, wobei die zweiten Aufnahmen auf einem zweiten Umfang angeordnet sind, der kleiner ist als der erste Umfang. Die erste und zweite Aufnahmevorrichtung sind derart angeordnet, dass der zweite Umfang innerhalb des ersten Umfangs liegt.

Ferner ist die EP 2 371 481 A1 bekannt, die ein Werkzeugmagazin zeigt. Bei einem Werkzeugwechsel wird eine Spindeleinheit in eine Übergabeposition verfahren, und ein Greifelement eines Arms führt eine Werkzeugübergabe durch. Zur Entnahme eines Werkzeugs aus dem Werkzeugmagazin wird ein Schlitten eingesetzt, der ein Werkzeug aus dem Werkzeugmagazin entnimmt und an eine Greifeinrichtung übergibt. Die Greifeinrichtung wiederum führt das entsprechende Werkzeug der Spindeleinheit zu.

Im Dokument DE 195 37 070 A1, das die Basis für den Oberbegriff des Anspruchs 1 darstellt, wird eine Werkzeugmaschine beschrieben, die mindestens eine Spindel zur drehfesten Aufnahme von Werkzeugen aufweist. Spannmittel sind in Richtung der Achse der Spindel beweglich und dienen zum Einspannen des Werkzeugs in einer Werkzeugaufnahme der Spindel. Die Bewegung der Spannmittel wird in Richtung der Achse durch Verdrehen der Spindel bzw. ihres Spindelrotors erzeugt.

Ferner sind die Dokumente DE 24 55 547 A1 sowie US 5,908,374 A1 bekannt.

### Gegenstand der Erfindung

Ziel der vorliegenden Erfindung ist es, eine Greifeinrichtung bereitzustellen, mit der ein einfacherer und schnellerer Wechsel eines Bearbeitungswerkzeugs bzw. Bearbeitungsaggregats ("Werkzeug") durchgeführt werden kann. Ferner ist es gemäß der vorliegenden Erfindung vorgesehen, ein Speichersystem für Bearbeitungswerkzeuge kompakt auszugestalten.

Ein Gedanke der vorliegenden Erfindung ist es, Werkzeuge aus einem Werkzeugspeicher/Werkzeugmagazin zu entnehmen und direkt in eine Aufnahme einer Bearbeitungsspindel einzuwechseln. Demnach wird das Werkzeug derart von einer Greifeinrichtung aufgenommen, dass der zur Fixierung des Werkzeugs in einer Aufnahme einer Bearbeitungsspindel vorgesehene Bereich (HSK-Konus) freigelegt ist.

Anspruch 1 stellt eine Greifeinrichtung bereit, die zumindest eines oder alle der oben genannten Ziele erreicht. Entsprechendes gilt für Anspruch 5, der ein Verfahren betrifft. Die Merkmale der abhängigen Ansprüche betreffen weitere bevorzugte Ausführungsformen, die jeweils mit einem der unabhängigen Ansprüche oder miteinander kombiniert werden können.

Mit der erfindungsgemäßen Greifeinrichtung können sehr schnelle Werkzeugwechselzyklen realisiert werden. Auch kann die Greifeinrichtung hauptzeitparallel einen Werkzeugwechsel vorbereiten, wodurch die Nebenzeiten verringert werden. Ferner ist ein Umschichten aus einem feststehenden Werkzeugmagazin oder Linearwechsler in ein mit einer Werkzeugwechselspindel mitfahrendes Werkzeugmagazin, bspw. einen Tellerwechsler, durch die Greifeinrichtung möglich. Auch kann die Greifeinrichtung als Shuttle ausgeführt werden und somit Werkzeuge aus einem einfachen, feststehenden Werkzeugmagazin zuführen.

Ein Speichersystem mit einem Werkzeugmagazin, das mehrere Ebenen aufweist, hat den Vorteil, dass eine große Anzahl von Werkzeugen platzsparend und kostengünstig gespeichert werden können. Ggf. können auch unterschiedliche Werkzeuge aus verschiedenen Werkzeugmagazinen bestückt werden. In Kombination mit der zuvor genannten Greifeinrichtung können die Nebenzeiten verringert werden.

Die vorliegende Erfindung stellt eine Greifeinrichtung zur Aufnahme eines Werkzeugs aus einem Werkzeugmagazin und zur Übergabe des Werkzeugs zu einer Bearbeitungseinheit, insbesondere einer Bearbeitungsspindel, bereit. Die Greifeinrichtung umfasst: einen Basiskörper sowie einen mit dem Basiskörper verbundenen Greifmechanismus, wobei der Greifmechanismus eingerichtet ist, eine kraftschlüssige Verbindung zu einem Außenumfang einer Werkzeugaufnahme herzustellen. Zusätzlich zur kraftschlüssigen Verbindung kann eine formschlüssige Verbindung herstellbar sein. Der Außenumfang einer Werkzeugaufnahme des Werkzeugs ist bevorzugt zylinderförmig ausgebildet, und schließt sich bevorzugt an den HSK-Konus an.

Auf diese Weise ist es möglich, dass ein HSK-Konus eines Werkzeugs freigelegt ist, und das Werkzeug somit direkt in eine Aufnahme einer Bearbeitungseinheit, insbesondere einer Bearbeitungsspindel, eingewechselt werden kann. Der Außenumfang einer Werkzeugaufnahme ist im Wesentlichen zylinderförmig ausgebildet und umfasst insbesondere eine HSK-Greiferrille, die u.a. zur Aufnahme des Werkzeugs in einem Werkzeugmagazin, insbesondere einer Werkzeugklammer, vorgesehen ist.

Der Greifmechanismus weist zwei Greiferzangen auf, die abschnittsweise einen Greifabschnitt zum Greifen des Außenumfangs einer Werkzeugaufnahme umfassen. Die Greiferzangen sind bevorzugt jeweils mittels einer Drehachse relativ zum Basiskörper schwenkbar, oder die Greiferzangen können parallel aufeinander zu bewegt werden. Gemäß einer Modifikation können die Greiferzangen eine gemeinsame Drehachse aufweisen.

Die Greiferzangen weisen im Bereich eines Endabschnitts eine reduzierte Dicke auf. Auf diese Weise kann eine Kollision mit einem Aufnahmeteller (Tellerwechsler) oder Aufnahmevorrichtungen eines Kettenwechslers vermieden werden.

Ferner weist der Greifmechanismus ein Stützelement auf, das am Basiskörper befestigt ist oder integral mit dem Basiskörper ausgebildet ist, welches Stützelement abschnittsweise einen Vorsprung aufweisen kann. Dieser Vorsprung ist bevorzugt derart ausgebildet, dass er in eine HSK-Greiferrille eindringen, und auf diese Weise ein Kippen des Werkzeugs verhindert. Insbesondere ist der Vorsprung abschnittsweise entlang eines Umfangs ausgebildet, und dringt in einem Umfangsabschnitt in eine HSK-Greiferrille ein, oder der Vorsprung ist ein Bolzen (Druckelement), der in eine Bohrung am Werkzeug eindringt. Der Vorsprung kann starr oder beweglich sein.

Die Greiferzangen können eine erste Aussparung für einen Stützbolzen und/oder einen Ausrichtbereich für einen Mitnehmerbolzen aufweisen, der bevorzugt als Aussparung ausgebildet ist. Bevorzugt ist der Ausrichtabschnitt an einem Endabschnitt der Greifzangen vorgesehen. Über den Mitnehmerbolzen ist eine Ausrichtung des Werkzeugs möglich.

In einer weiteren Zielrichtung kann eine ggf. horizontale Bohrung in der Werkzeugaufnahme vorgesehen sein und das Werkzeug über einen eingeführten oder durchgeführten Stift bewegt werden.

Ferner wird ein Speichersystem für Bearbeitungswerkzeuge beschrieben, umfassend ein Werkzeugmagazin mit mehreren Ebenen, insbesondere ein Teller-Werkzeugmagazin mit mehreren Aufnahmetellern, sowie zumindest einer Greifeinrichtung, die entlang einer bevorzugt vertikalen Führung relativ zum Werkzeugmagazin bewegbar ist. Durch die Anordnung mehrere Ebenen kann das Werkzeugmagazin, und somit auch das Speichersystem, äußerst kompakt ausgestaltet werden. Somit ist es möglich, das Speichersystem in eine Bearbeitungsmaschine zu integrieren. Die genannte Greifeinrichtung kann durch die zuvor beschriebenen Einzelmerkmale, insbesondere nach Anspruch 1, aufgebaut sein.

Ein Werkzeug wird an oder in einer Werkzeugklammer des Werkzeugmagazins gehalten wird, wobei die Werkzeugklammer bevorzugt an einem Aufnahmeteller vorgesehen ist. Hierdurch wird das Werkzeug im Werkzeugmagazin gehalten, ggf. geklemmt gehalten.

Ferner kann die Greifeinrichtung eingerichtet sein, eine kraftschlüssige Verbindung oder eine kraftschlüssige und formschlüssige Verbindung zu einem Außenumfang einer Werkzeugaufnahme eines Werkzeugs herzustellen. In dieser Variante kann durch Bereitstellen einer kraftschlüssigen Verbindung das Werkzeug aus einer Werkzeugklammer gelöst werden.

Die Ebenen des Werkzeugmagazins, bevorzugt die mehreren Aufnahmeteller des Teller-Werkzeugmagazins, sind bevorzugt unabhängig voneinander bewegbar, insbesondere drehbar. Somit ist eine bspw. manuelle Entnahme eines Werkzeugs bei gleichzeitigem Betrieb einer anderen Ebene des Werkzeugmagazins möglich.

In einer weiteren Variante ist ein Drehmechanismus vorgesehen, der eingerichtet ist, die zumindest eine, bevorzugt zwei, Greifeinrichtungen um eine vertikale Achse zu drehen. Auf diese Weise können die Nebenzeiten weiter verkürzt werden. Bevorzugt ist der Drehmechanismus an einem zweiten, in horizontaler Richtung bewegbaren Schlitten angebracht.

Ferner wird eine Bearbeitungsmaschine mit einem Speichersystem bereitgestellt. Das Speichersystem ist in die Bearbeitungsmaschine integriert, und umfasst ein Werkzeugmagazin mit mehreren Ebenen, insbesondere ein Teller-Werkzeugmagazin mit mehreren Aufnahmetellern.

Ein Verfahren für eine Übergabe eines Werkzeugs an eine Bearbeitungseinheit, insbesondere eine Bearbeitungsspindel umfasst die Schritte gemäß Anspruch 5

Auf diese Weise kann das Werkzeug vom Werkzeugmagazin mittels der Greifeinrichtung direkt in die Bearbeitungseinheit übergeben werden, insbesondere da der HSK-Konus relativ zur Greifeinrichtung vorsteht, nachdem die Greifeinrichtung an einem Umfang der Werkzeugaufnahme eine kraftschlüssige oder kraft- und formschlüssige Verbindung zum Werkzeug herstellt.

Das Verfahren wird bevorzugt unter Einsatz der zuvor beschriebenen Greifeinrichtung oder Bearbeitungsmaschine bzw. des zuvor beschriebenen Speichersystems durchgeführt.

### Kurze Beschreibung der Zeichnungen

- Fig. 1: ist eine perspektivische Ansicht einer Greifeinrichtung gemäß einer Ausführungsform der vorliegenden Erfindung.
- Fig. 2: zeigt die in Fig. 1 dargestellte Greifeinrichtung vor der Aufnahme eines Werkzeugs.

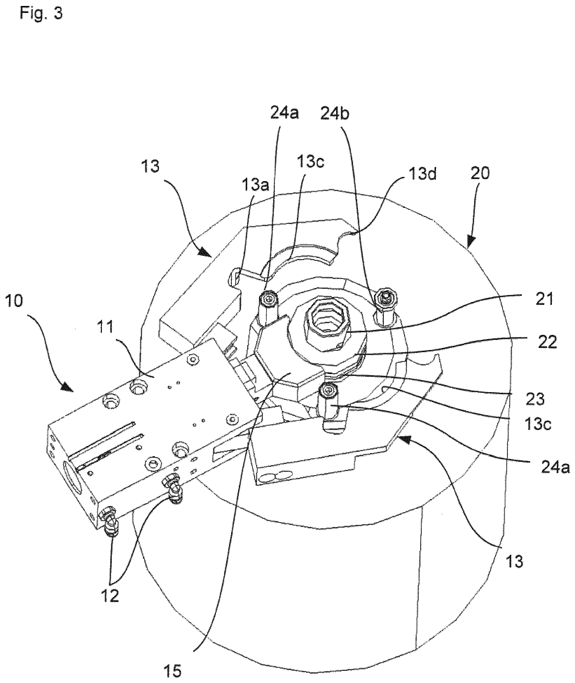

- Fig. 3: ist eine aus einer anderen Blickrichtung betrachtete Ansicht entsprechend Fig. 2.
- Fig. 4: zeigt ein mit der Greifeinrichtung gegriffenes Werkzeug vor der Übergabe in eine Bearbeitungsspindel.
- Fig. 5: zeigt ein mit der Greifeinrichtung gegriffenes Werkzeug.
- Fig. 6: zeigt die Greifeinrichtung bei der Übernahme eines Werkzeugs von einem Aufnahmeteller eines Werkzeugmagazins
- Fig. 7: zeigt ein Werkzeugmagazin mit mehreren nebeneinander angeordneten, tellerförmigen Aufnahmetellern.
- Fig. 8: zeigt mehrere nebeneinander angeordnete Werkzeugmagazine mit mehreren Aufnahmetellern.

Detaillierte Beschreibung der bevorzugten Ausführungsformen Nachfolgend werden Ausführungsformen der vorliegenden Erfindung im Detail erläutert.

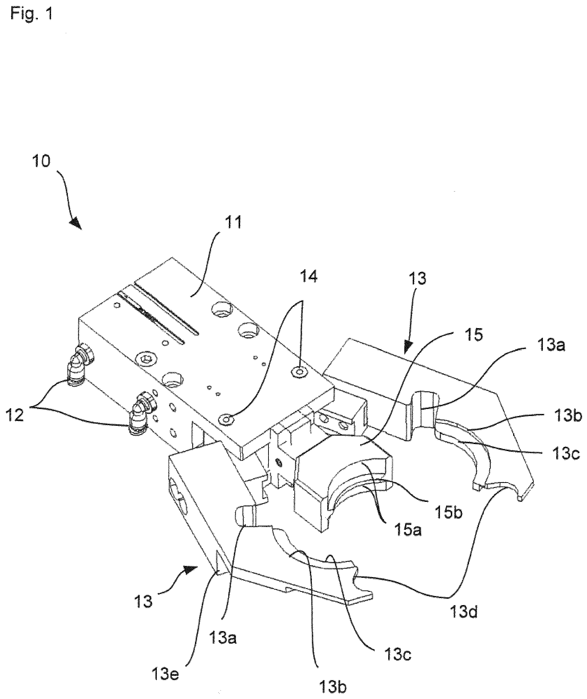

Fig. 1 zeigt eine Ausführungsform einer erfindungsgemäßen Greifeinrichtung 10. Die Greifeinrichtung 10 umfasst einen Basiskörper 11, der mit Druckluftanschlüssen 12 versehen ist. Durch die Druckluftanschlüsse 12 wird ein Medium zur Betätigung von Greiferzangen 13 zugeführt, wodurch die Greiferzangen 13 der Greifeinrichtung 10 pneumatisch geöffnet und geschlossen werden können.

In der vorliegenden Ausführungsform umfasst der Basiskörper 11 Druckluftanschlüsse 12, die einen Pneumatikmechanismus zum Schwenken der Greiferzangen 13 betätigen. In einer alternativen Ausführungsform können die Greiferzangen 13 auch hydraulisch betätigt werden. Auch ist es in weiteren Varianten möglich, am Basiskörper 11 einen Elektromotor vorzusehen, der zur Betätigung der Greiferzangen 13 verwendet wird.

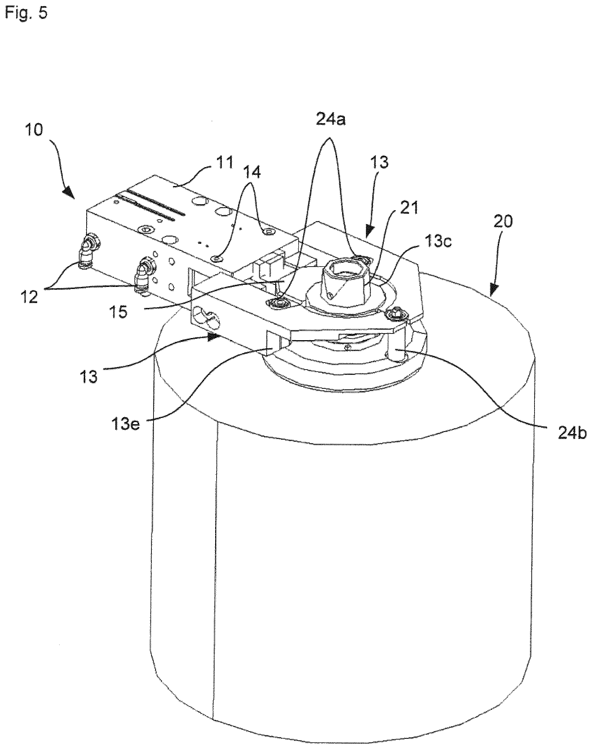

Die Greiferzangen 13 sind jeweils mittels eines Drehgelenks 14 mit dem Basiskörper 11 verbunden, und auf diese Weise zwischen einer geöffneten Stellung (Fig. 1) und einer geschlossenen Stellung (Fig. 5) schwenkbar.

Während in der vorliegenden Ausführungsform für jede der Greiferzangen 13 ein Drehgelenk 14 vorgesehen ist, können die Greiferzangen gemäß einer Modifikation der vorliegenden Ausführungsform auch an einem gemeinsamen Drehgelenk mit gemeinsamer Drehachse angebracht sein. Auch können die Greiferzangen als Parallelgreifer ausgebildet sein.

Am Basiskörper 11 ist zwischen den Greiferzangen 13 ein Stützelement 15 angebracht, das eine Anlagefläche 15a für eine Werkzeugaufnahme eines Werkzeugs 20 aufweist. Die Anlagefläche 15a hat einen derartigen Radius, dass diese gegen einen Außenumfang einer Werkzeugaufnahme des Werkzeugs 20 anliegen kann. Darüber hinaus ist im Bereich der Anlagefläche 15a ein Vorsprung 15b vorgesehen, der bei Aufnahme eines Werkzeugs 20 in eine HSK-Greiferrille 23 des Werkzeugs 20 eindringt.

Obwohl das Stützelement 15 in der vorliegenden Ausführungsform als ein zum Basiskörper separates Bauteil ausgebildet ist, kann das Stützelement 15 auch integral mit dem Basiskörper 11 ausgebildet sein. Das Stützelement 15 dient dazu, das mit der Greifeinrichtung 10 aufgenommene Werkzeug 20 abzustützen und gegen Verkippen zu sichern.

Jede der Greiferzangen 13 umfasst eine erste Aussparung 13a, die entsprechend einem Stützbolzen 24a des Werkzeugs 20 dimensioniert ist, so dass der Stützbolzen 24a in die Aussparung 13a eingeführt werden kann.

Ferner umfasst jede Greiferzange 13 eine Greifabschnitt 13c für einen Umfang der Werkzeugaufnahme 22 eines Werkzeugs 20. In diesem Bereich ist auch ein Absatz 13b vorgesehen. Der Radius des Greifabschnitts 13c entspricht demjenigen der Anlagefläche 15a des Stützelements 15.

In einem vom Basiskörper 11 weg weisenden Endbereich der Greiferzangen 13 ist an jeder der Greiferzangen 13 eine zweite Aussparung 13d vorgesehen, die in etwa gemäß einem halben Umfang eines Mitnehmerbolzens 24b eines Werkzeuges 20 dimensioniert ist. Dabei wirkt die zweite Aussparung 13d einer der Greiferzangen 13 mit derjenigen der zweiten Greiferzange 13 zusammen, um den entsprechenden Mitnehmerbolzen 24b im geschlossenen Zustand der Greifeinrichtung 10 zumindest abschnittsweise zu umfassen. Dabei berühren sich in der vorliegenden Ausführungsform die Spitzen der Greiferzangen 13 nicht.

Jede Greiferzange 13 hat ausgehend von der ersten Aussparung 13a in Richtung des Endbereichs eine reduzierte Dicke. Auf diese Weise kann dieser Bereich der Greiferzangen 13 über einen Aufnahmeteller 101 eines Werkzeugmagazins geführt werden. Der zum Basiskörper 11 weisende Teil der Greiferzangen 13 hingegen hat eine größere Dicke, um den Greiferzangen 13 im Anbringungsbereich zum Basiskörper 11 (Drehgelenke 14) eine größere Stabilität zu verleihen. Durch die beschriebene Dickenänderung der Greiferzangen 13 ist eine Stufe 13e ausgebildet, um bei einer Entnahme eines Werkzeugs aus einem Werkzeugmagazin eine Kollision mit diesem, insbesondere mit einem Aufnahmeteller 101, zu vermeiden.

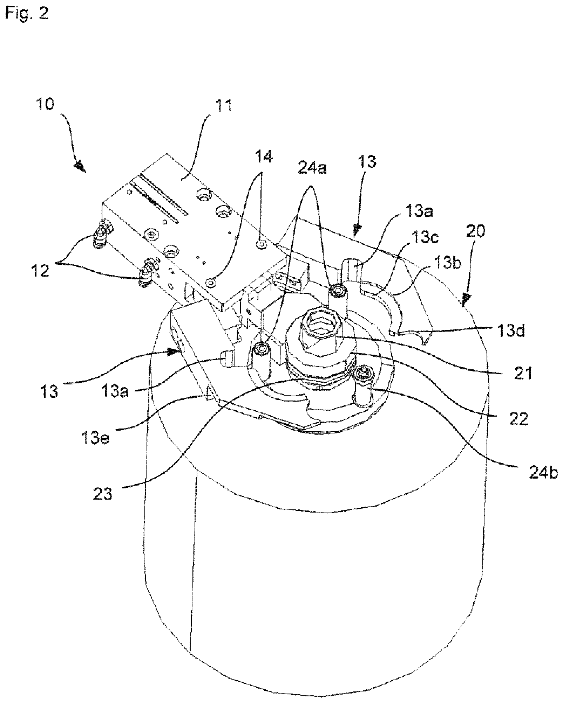

Fig. 2 zeigt neben der bereits beschriebenen Greifeinrichtung 10 eine schematische Darstellung eines Werkzeugs 20. Die Darstellung des Werkzeugs 20 ist bewusst abstrakt gehalten, und lediglich der Aufnahmebereich des Werkzeugs 20 wird in den Figuren detaillierter gezeigt und nachfolgend beschrieben. Rein beispielhaft kann es sich um ein Fräswerkzeug, ein Sägewerkzeug, ein Bohrwerkzeug usw. oder um Aggregate mit mehreren Werkzeugen handeln.

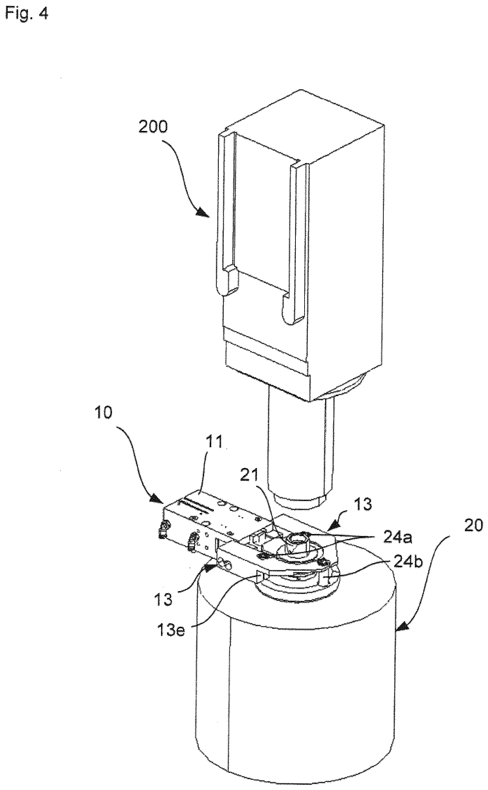

Im Aufnahmebereich des Werkzeugs 20 befindet sich der HSK-Konus 21, der zur Klemmung des Werkzeugs 20 in einer Bearbeitungsspindel 200 (siehe Fig. 4) verwendet wird. Anschließend an den HSK-Konus 21 erstreckt sich der Umfang der Werkzeugaufnahme 22, der eine HSK-Greiferrille 23 umfasst.

Benachbart zum HSK-Konus 21 bzw. zum Umfang der Werkzeugaufnahme 22 sind im Aufnahmebereich des Werkzeugs 20 getrennt voneinander angeordnete Stützbolzen 24a sowie ein Mitnehmerbolzen 24b vorgesehen. Die Stütz- und Mitnehmerbolzen 24a, 24b sind in Umfangsrichtung um die HSK-Aufnahme 21 in einem Winkel von 120° zueinander angeordnet.

Beim später beschriebenen Einwechseln des Werkzeugs 20 in eine Aufnahme der Bearbeitungsspindel 200 wird der Mitnehmerbolzen 24b mit dieser verbunden, und über die Stützbolzen 24a kann bspw. ein Medium in das Werkzeug 20 übertragen werden. Der Mitnehmerbolzen 24b sorgt unter anderem dafür, ein Drehmoment der Aggregateachse der Bearbeitungsspindel 200 auf einen inneren Abschnitt des Werkzeugs 20 zu übertragen.

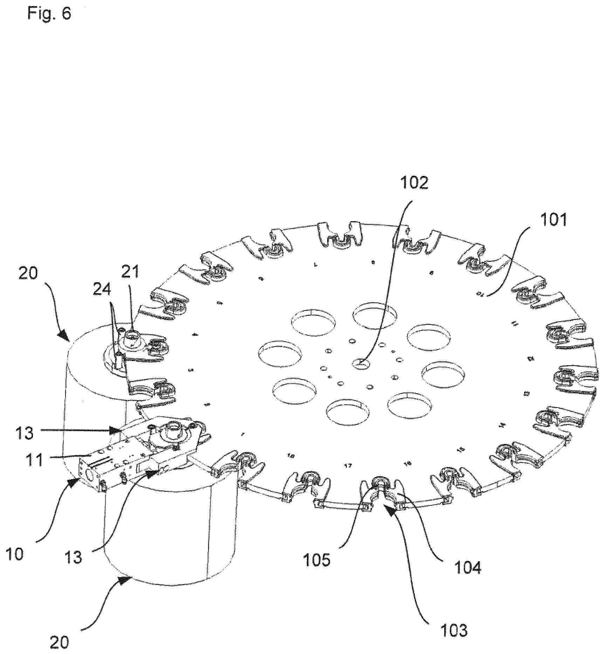

Fig. 6 ist eine Darstellung, die einen Ausschnitt eines einen Aufnahmeteller 101 aufweisenden Werkzeugmagazins zeigt. Der Aufnahmeteller 101 ist um eine sich in vertikaler Richtung erstreckende Welle drehbar gelagert, die in eine mittig angeordnete Ausnehmung 102 des Aufnahmetellers 101 eingeführt ist.

Am Außenumfang des Aufnahmetellers 101 sind in gleichen Winkelabständen zueinander Aufnahmen 103 vorgesehen, die jeweils Werkzeugklammern 104 umfassen. In diese Aufnahmen 103 können jeweils Werkzeuge (Bearbeitungswerkzeuge bzw. Bearbeitungsaggregate) 20 eingeführt und dort hängend aufbewahrt werden. Die Werkzeugklammern 104 dienen als Auflage für die HSK-Greiferrille 23 der Werkzeuge 20.

In Fig. 6 sind rein beispielhaft zwei Werkzeuge 20 in entsprechenden Aufnahmen 103 vorgesehen. Jede Aufnahme 103 sowie die daran angebrachte Werkzeugklammer 104 umfassen eine zur Mitte des Aufnahmetellers 101 weisende Ausbuchtung 105, in die der Mitnehmerbolzen 24b eines Werkzeugs 20 eingeschoben wird. Die Stützbolzen 24a des Werkzeugs befinden sich in diesem Zustand außerhalb der Aufnahme 103.

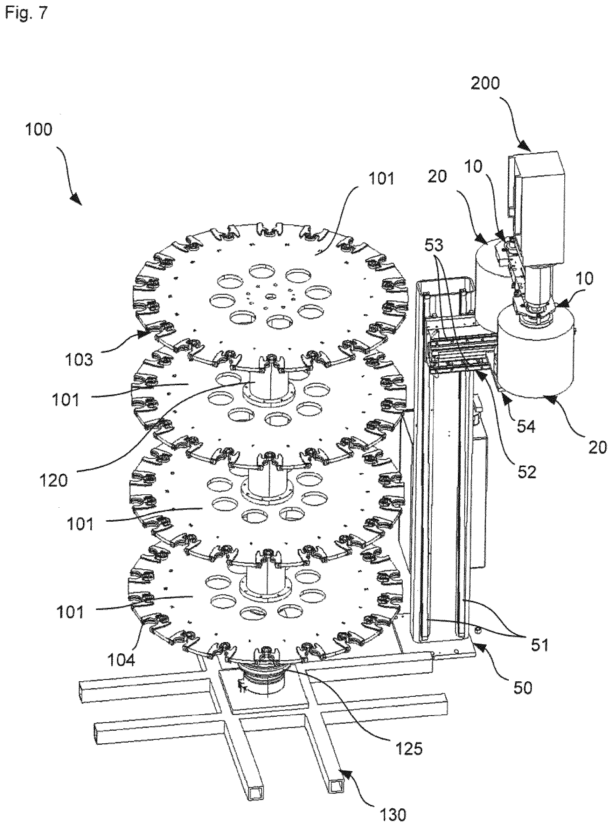

In Fig. 7 wird eine erste Ausführungsform eines Speichersystems mit einem Werkzeugmagazins 100 dargestellt. Das Werkzeugmagazin 100 umfasst mehrere Aufnahmeteller 101 (im konkreten Beispiel vier Aufnahmeteller), die über eine gemeinsame Stütze 120 miteinander verbunden werden. Die Aufnahmeteller 101 sind dabei konzentrisch übereinander angeordnet. Durch die Anordnung der Aufnahmeteller 101 in konzentrischer Weise übereinander kann eine äußerst kompakte Bauform bereitgestellt werden, die in eine Bearbeitungsmaschine integriert werden kann.

Obwohl die Aufnahmeteller 101 über eine gemeinsame Drehwelle angetrieben werden können, ist es gemäß der vorliegenden Ausführungsform bevorzugt, dass jeder Aufnahmeteller 101 von einem Antriebsmotor 125 entkoppelt ist. Alternativ kann jeder Aufnahmeteller 101 auch über einen separaten Antrieb verfügen. Auf diese Weise ist es möglich, jeden Aufnahmeteller 101 einzeln zu bewegen. Dies kann zur weiteren Verkürzung der Nebenzeiten genutzt werden.

Die Stütze 120 der Aufnahmeteller 101 wird gegenüber einem Ständer 130 abgestützt, der ferner den Antriebsmotor 125 aufnimmt.

Benachbart zum Werkzeugmagazin 100 ist eine vertikal ausgerichtete Führung 50 vorgesehen, welche ein Paar in vertikaler Richtung verlaufende, parallele Führungsschienen 51 umfasst. Entlang der Führungsschienen 51 ist ein erster Schlitten 52 in vertikaler Richtung auf und ab bewegbar. Der erste Schlitten 52 seinerseits weist zwei in horizontaler Richtung verlaufende Führungsschienen 53 auf, entlang derer ein zweiter Schlitten 54 verfahrbar angeordnet ist.

Der zweite Schlitten 54 trägt einen Drehmechanismus 60, der eine Schwenkbewegung zweier Greifeinrichtungen 10 um eine in vertikaler Richtung verlaufende Achse durchführen kann. Dabei sind die Greifeinrichtungen 10 in unterschiedliche Richtungen ausgerichtet (im vorliegenden Ausführungsbeispiel in entgegengesetzte Richtungen).

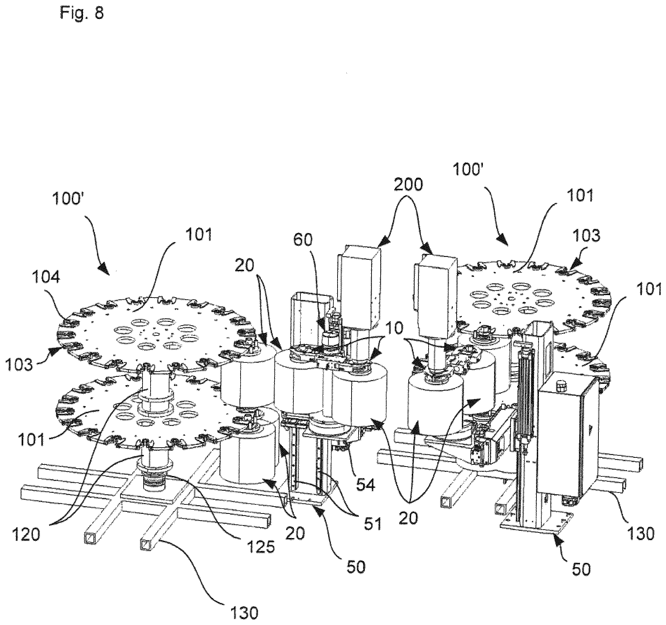

In Fig. 8 ist eine weitere Ausführungsform dargestellt. Die in Figur 8 dargestellte Ausführungsform zeichnet sich gegenüber der in Fig. 7 dargestellten Ausführungsform im Wesentlichen dadurch aus, dass mehrere Magazine 100' vorgesehen sind, die im vorliegenden Fall lediglich zwei übereinander angeordnete Aufnahmeteller 101 umfassen. Diese Anordnung kann dazu vorgesehen sein, mehrere Bearbeitungsspindeln 200 parallel mit Werkzeugen 20 zu beschicken.

Bei den in Figs. 7 und 8 dargestellten Ausführungsformen ist ersichtlich, dass die dargestellten Werkzeugmagazine 100, 100' nicht auf eine bestimmte Anzahl von Aufnahmetellern 101 beschränkt sind, sondern zwei, drei, vier oder mehr Aufnahmeteller 101 vorgesehen sein können.

Darüber hinaus wird darauf hingewiesen, dass für die Funktionsweise der Greifeinrichtung 10 auch ein Werkzeugmagazin mit lediglich einem Aufnahmeteller 101 verwendet werden kann, oder alternativ auch ein Kettenwechsler zum Einsatz kommen kann.

In den in Figuren 7 und 8 eingestellten Ausführungsformen sind zwei Greifeinrichtungen 10 gepaart angeordnet, die mittels eines gemeinsamen Drehmechanismus 60 gedreht werden. Allerdings ist es auch möglich, lediglich eine Greifeinrichtung, drei Greifeinrichtungen oder vier Greifeinrichtungen am Drehmechanismus 60 anzubringen.

Gemäß einer weiteren Variante der zuvor beschriebenen Ausführungsform ist lediglich eine Greiferzange 13 beweglich am Basiskörper 11 angebracht, wohingegen eine weitere Greiferzange 13 am Basiskörper 11 fixiert ist.

In einer weiteren Modifikation weist die Greifeinrichtung 10 keine schwenkbare Greiferzange 13 auf. Vielmehr ist eine Greifaufnahme an der Greifeinrichtung vorgesehen, die ähnlich ausgebildet ist wie eine Aufnahme 103 des zuvor beschriebenen Werkzeugmagazins 100, 100'. Gemäß dieser Variante wird die Greifeinrichtung bei der Aufnahme eines Werkzeugs 20 aus dem Werkzeugmagazin 100, 100' in den Bereich der Aufnahme 103 verfahren, so dass ein am Werkzeugmagazin vorgesehener Schieber ein Werkzeug 20 aus der Aufnahme 103 in die Greifaufnahme der Greifeinrichtung schiebt. Ein oder mehrere Vorsprünge (ähnlich dem Vorsprung 15b) dringen bei diesem Vorgang in die HSK-Greiferrille 23 ein, um das Werkzeug 20 während der Übergabe zu einer Bearbeitungsspindel 200 zu halten.

In einer weiteren Modifikation der vorliegenden Erfindung ist im Bereich des Werkzeugmagazins ein Schieber vorgesehen, der ein Werkzeug in einer Greifeinrichtung derart einschiebt, dass die Greifeinrichtung keine Bewegung zur Aufbringung einer Kraft zum Halten des Werkzeuges aufbringen muss. Rein beispielhaft können Federelemente eine kraftschlüssige Verbindung zwischen einer Umfangsfläche der Werkzeugaufnahme 22 und der Greifeinrichtung gemäß dieser Variante bereitstellen.

Auch kann es alternativ oder zusätzlich vorgesehen sein, dass die Greifeinrichtung in einen HSK-Konus 21 eingreift, und somit das Werkzeug bei der Übergabe in eine Bearbeitungsspindel hält oder zumindest sichert. Während der Übergabe kann das Werkzeug demnach zusätzlich im HSK-Konus gegriffen werden oder ein HSK-Konusgreifer zieht das Werkzeug aus der Werkzeugklammer im Werkzeugmagazin und schiebt es in eine Greiferklammer, bevor das Werkzeug von der Bearbeitungsspindel abgeholt wird. Bei der Übergabe in eine Aufnahme einer Bearbeitungsspindel wird der HSK-Konus wieder freigegeben.

Darüber hinaus kann das Werkzeugmagazin gemäß einer weiteren Zielrichtung einen Schieber umfassen, der ein Werkzeug aus einer Aufnahme des Werkzeugmagazins herausbewegt, dass das Werkzeug in einer ausgefahrenen Stellung des Schiebers direkt einer Bearbeitungsspindel zugeführt werden kann.

Während gemäß den beschriebenen Ausführungsformen und Modifikationen am Werkzeug 20 Mitnehmerbolzen 24 vorgesehen sind, ist die hier beschriebene Greifeinrichtung 10 nicht auf den Einsatz für Werkzeuge 20 mit Mitnehmerbolzen 24 beschränkt. Ferner können gemäß einer weiteren Variante Werkzeuge mit lediglich einem Mitnehmerbolzen übergeben werden.

Der Wechselvorgang zum Auswechseln eines Werkzeugs 20 stellt sich wie folgt dar.

Zunächst wird ein Aufnahmeteller 101 des Werkzeugmagazins 100, 100' derart gedreht, dass eine Aufnahme 103 mit einem entsprechenden Werkzeug 20, das der Bearbeitungsspindel 200 zugeführt werden soll, in eine Übergabeposition verschwenkt wird.

Der erste Schlitten 52 wird entlang den Führungsschienen 51 der Führung 50 derart in vertikaler Richtung verfahren, dass eine Greifeinrichtung 10 in eine Ebene des entsprechenden Aufnahmetellers 101 gelangt.

Anschließend wird die Greifeinrichtung 10 durch Bewegen des zweiten Schlittens 54 in Richtung des aufzunehmenden Werkzeugs 20 entlang der Führungsschienen 53 verfahren.

Die Greiferzangen 13 der Greifeinrichtung 10 werden, nachdem die Anlagefläche 15a des Stützelements 15 den Umfang der Werkzeugaufnahme 22 berührt und der Vorsprung 15b in die HSK-Greiferrille 23 eindringt, geschlossen, und der Greifabschnitt 13c der Greiferzangen 13 legt sich beim Schließen der Greiferzangen 13 an den Umfang der Werkzeugaufnahme 22 des Werkzeugs 20 an. Gleichzeitig werden durch die ersten Aussparungen 13a sowie die zweiten Aussparungen 13d der Greiferzangen 13 die Stützbolzen 24a abschnittsweise umfasst. Die Aussprungen 13d dienen zur Ausrichtung, und berühren beim Schließen der Greifeinrichtung den Mitnehmerbolzen 24b.

Ein Schließen der Greifeinrichtung 10 durch Bewegen der Greiferzangen 13 führt zu einer Kombination aus Form- und Kraftschluss, nachdem er Vorsprung 15b in die HSK-Greiferrille 23 eindringt und die Greifabschnitte 13c (und 15b) an einem Außenumfang der Werkzeugaufnahme 22 anliegen. Durch die Greiferzangen 13 wird über die Greifabschnitte 13c eine kraftschlüssige Verbindung hergestellt.

Nachdem die Greifeinrichtung 10 das Werkzeug 20, wie in Fig. 6 dargestellt, aufgenommen hat, wird der zweite Schlitten 54 in horizontaler Richtung verfahren und das Werkzeug 20 aus der Aufnahme 103 entnommen bzw. von der Werkzeugklammer 104 des Werkzeugmagazins 100 abgezogen.

Durch eine anschließende Schwenkbewegung des Drehmechanismus 60 wird die Greifeinrichtung 10, welche soeben das Werkzeug 20 aufgenommen hat, in Richtung einer Bearbeitungsspindel 200 gedreht, wohingegen die ebenfalls am Drehmechanismus 60 angebrachte weitere Greifeinrichtung 10 in Richtung des Werkzeugmagazins 10 geschwenkt wird. In dieser weiteren Greifeinrichtung 10 ist ggf. ein Werkzeug geklemmt, das soeben aus einer Bearbeitungsspindel 200 entnommen wurde.

Durch eine Bewegung in vertikaler Richtung wird das Werkzeug 20 der Bearbeitungsspindel 200 übergeben. Weil der HSK-Konus 21 derart angeordnet ist, dass sich dieser oberhalb der Greifzangen 13 der Greifeinrichtung 10 erstreckt (mit anderen Worten im gegriffen Zustand der Greifeinrichtung freigelegt ist), kann das Werkzeug 20 in der Bearbeitungsspindel 200 über den HSK-Konus 21 geklemmt werden.

Nachfolgend werden die Greiferzangen 13 geöffnet, und die Bearbeitungsspindel 200 in einen (nicht dargestellten) Bearbeitungsbereich der Bearbeitungsmaschine verfahren.

Während die Bearbeitungsspindel 200 mit dem eingewechselten Werkzeug 20 eine Bearbeitung durchführt, kann das in der weiteren Greifeinrichtung 10 aufgenommene Werkzeug 20 in das Werkzeugmagazin 100 übergeben werden. Hierzu wird der zweite Schlitten 54 in Richtung des Werkzeugmagazins 100 verfahren, und das Werkzeug 20 in eine Aufnahme 103 eingeschoben. Der Mitnehmerbolzen 24b dringt dabei in die Ausbuchtung 105 ein. Anschließend werden die Greiferzangen 13 geöffnet, und die Greifeinrichtung 10 vom Werkzeugmagazin 100 weg bewegt. Das Werkzeug wird dabei am Aufnahmeteller 101 eingehängt, indem die HSK-Greiferrille 23 in einen entsprechenden Abschnitt der Werkzeugklammer 104 eindringt.

Anschließend kann beispielsweise ein neues Werkzeug 20 ausgewählt und aufgenommen werden, das wiederum der Bearbeitungsspindel 200 zu übergeben ist. Während des Wechsels führt die Bearbeitungsspindel 200 eine Bearbeitung an einem Werkstück durch.

## Patentansprüche

1. Greifeinrichtung (10) zur Aufnahme eines Werkzeugs (20) aus einem Werkzeugmagazin (100, 100') und zur Übergabe des Werkzeugs (20) zu einer Bearbeitungseinheit, insbesondere einer Bearbeitungsspindel (200), mit:
einem Basiskörper (11) sowie einem mit dem Basiskörper verbundenen Greifmechanismus (13, 15),
wobei der Greifmechanismus (13, 15) eingerichtet ist, zumindest eine kraftschlüssige Verbindung zu einem Außenumfang einer Werkzeugaufnahme (22) eines Werkzeugs (20), herzustellen,
wobei der Greifmechanismus ein Stützelement (15) umfasst, das am Basiskörper (11) befestigt ist oder integral mit dem Basiskörper (11) ausgebildet ist,
wobei der Greifmechanismus zwei Greiferzangen (13) umfasst, die einen Greifabschnitt (13c) zum Greifen des Außenumfang einer Werkzeugaufnahme (22) aufweisen,
**dadurch gekennzeichnet, dass**
die Greiferzangen (13) im Bereich eines Endabschnitts eine reduzierte Dicke aufweisen.

2. Greifeinrichtung (10) gemäß Anspruch 1, **dadurch gekennzeichnet, dass** die Greiferzangen (13) jeweils mittels einer Drehachse (14) oder einer gemeinsamen Drehachse relativ zum Basiskörper (11) schwenkbar sind, oder die Greiferzangen parallel aufeinander zu bewegbar sind.

3. Greifeinrichtung (10) gemäß Anspruch 2, **dadurch gekennzeichnet, dass** die Greiferzangen (13) eine erste Aussparung (13a) für einen Stützbolzen (24a) und/oder einen Ausrichtbereich (13d) für einen Mitnehmerbolzen (24) aufweisen, der insbesondere als Aussparung ausgebildet ist.

4. Greifeinrichtung (10) gemäß einem der vorangegangenen Ansprüche, bei der das Stützelement (15) abschnittsweise einen Vorsprung (15b) umfasst, der derart dimensioniert ist, dass der Vorsprung (15b) in eine HSK-Greiferrille (23) eines Werkzeugs (20) eindringen kann.

5. Verfahren für eine Übergabe eines Werkzeugs (20) an eine Bearbeitungseinheit, insbesondere eine Bearbeitungsspindel (200), umfassend die Schritte:
Zumindest kraftschlüssiges oder kraftschlüssiges und formschlüssiges Greifen eines Werkzeugs (20) mit einer Greifeinrichtung (10) an einem Außenumfang einer Werkzeugaufnahme (22) des Werkzeugs (20),
Entnehmen des Werkzeugs (20) aus einem Werkzeugmagazin (100, 100'), insbesondere aus einer Werkzeugklammer (104) eines Aufnahmetellers (101),
Übergeben des Werkzeugs (20) in eine Aufnahme einer Bearbeitungseinheit, insbesondere eine Bearbeitungsspindel (200), aus der Greifeinrichtung (10),
wobei der Greifmechanismus ein Stützelement (15) umfasst, das am Basiskörper (11) befestigt ist oder integral mit dem Basiskörper (11) ausgebildet ist,
wobei der Greifmechanismus zwei Greiferzangen (13) umfasst, die einen Greifabschnitt (13c) zum Greifen des Außenumfang einer Werkzeugaufnahme (22) aufweisen, und
die Greiferzangen (13) im Bereich eines Endabschnitts eine reduzierte Dicke aufweisen.

## Claims

1. Gripper device (10) for picking up a tool (20) from a tool magazine (100, 100') and for transferring the tool (20) to a processing unit, in particular a processing spindle (200), with:
a base body (11) and a gripper mechanism (13, 15) connected with the base body,
wherein the gripper mechanism (13, 15) is configured to establish at least a force-locking connection with an outer circumference of a tool holder (22) of a tool (20),
wherein the gripper mechanism has a support element (15) which is fastened to the base body (11) or formed integrally with the base body (11),
wherein the gripper mechanism has two gripper clamps (13) which have a gripper section (13c) for gripping the outer circumference of a tool holder (22),
**characterised in that**
the gripper clamps (13) have a reduced thickness in the region of an end section.

2. Gripper device (10) according to claim 1, **characterised in that** the gripper clamps (13) are in each case swivelable relative to the base body (11) by means of an axis of rotation (14) or a common axis of rotation, or the gripper clamps are moveable towards one another in a parallel manner.

3. Gripper device (10) according to claim 2, **characterised in that** the gripper clamps (13) have a first recess (13a) for a support bolt (24a) and/or an alignment region (13d) for a driving pin (24) which is in particular formed as a recess.

4. Gripper device (10) according to one of the preceding claims, wherein the support element (15) has in one section a projection (15b) which is dimensioned such that the projection (15b) can penetrate into an HSK gripper groove (23) of a tool (20).

5. Method for transferring a tool (20) to a processing unit, in particular a processing spindle (200), comprising the steps:
gripping a tool (20) on an outer circumference of a tool holder (22) of the tool (20) in at least a force-locking or a force-locking and form-locking manner with a gripper device (10),
removing the tool (20) from a tool magazine (100, 100'), in particular from a tool bracket (104) of a holder plate (101),
transferring the tool (20) from the gripper device (10) into a holder of a processing unit, in particular a processing spindle (200),
wherein the gripper mechanism has a support element (15) which is fastened to the base body (11) or formed integrally with the base body (11),
wherein the gripper mechanism has two gripper clamps (13) which have a gripper section (13c) for gripping the outer circumference of a tool holder (22), and
the gripper clamps (13) have a reduced thickness in the region of an end section.

## Revendications

1. Dispositif de préhension (10) pour recevoir un outil (20) provenant d'un magasin d'outils (100, 100') et pour transférer l'outil (20) vers une unité d'usinage, en particulier une broche d'usinage (200), avec :
un corps de base (11) ainsi qu'un mécanisme de préhension (13, 15) connecté au corps de base,
dans lequel le mécanisme de préhension (13, 15) est configuré pour établir au moins une connexion par complémentarité de force avec une circonférence extérieure d'un logement d'outil (22) d'un outil (20),
dans lequel le mécanisme de préhension comprend un élément de support (15) qui est fixé au corps de base (11) ou qui est réalisé d'un seul tenant avec le corps de base (11),
dans lequel le mécanisme de préhension comprend deux pinces de préhenseur (13) qui présentent une section de préhension (13c) pour saisir la circonférence extérieure d'un logement d'outil (22),
**caractérisé en ce**
**que** les pinces de préhenseur (13) présentent une épaisseur réduite au niveau d'une section d'extrémité.

2. Dispositif de préhension (10) selon la revendication 1, **caractérisé en ce que** les pinces de préhenseur (13) peuvent respectivement pivoter par rapport au corps de base (11) au moyen d'un axe de rotation (14) ou d'un axe de rotation commun, ou **en ce que** les pinces de préhenseur peuvent être déplacées parallèlement l'une à l'autre.

3. Dispositif de préhension (10) selon la revendication 2, **caractérisé en ce que** les pinces de préhenseur (13) présentent un premier évidement (13a) pour un boulon de support (24a) et/ou une zone d'alignement (13d) pour un boulon d'entraînement (24), qui est réalisé en particulier en tant qu'évidement.

4. Dispositif de préhension (10) selon l'une quelconque des revendications précédentes, dans lequel l'élément de support (15) comprend, par sections, une saillie (15b) qui est dimensionnée de sorte que la saillie (15b) peut s'introduire dans une rainure de préhenseur HSK (23) d'un outil (20).

5. Procédé pour un transfert d'un outil (20) à une unité d'usinage, en particulier une broche d'usinage (200), comprenant les étapes consistant à :
saisir au moins par complémentarité de force ou par complémentarité de force et par complémentarité de forme un outil (20) avec un dispositif de préhension (10) sur une circonférence extérieure d'un logement d'outil (22) de l'outil (20),
prélever l'outil (20) d'un magasin d'outils (100, 100'), en particulier d'une pince à outil (104) d'un plateau de réception (101),
transférer l'outil (20) dans un logement d'une unité d'usinage, en particulier une broche d'usinage (200), à partir du dispositif de préhension (10),
dans lequel le mécanisme de préhension comprend un élément de support (15) qui est fixé au corps de base (11) ou qui est réalisé d'un seul tenant avec le corps de base (11),
dans lequel le mécanisme de préhension comprend deux pinces de préhenseur (13) qui présentent une section de préhension (13c) pour saisir la circonférence extérieure d'un logement d'outil (22), et
les pinces de préhenseur (13) présentent une épaisseur réduite au niveau d'une section d'extrémité.
